# EUROPEAN PATENT SPECIFICATION

(11) **EP 2 836 047 B1**
(45) Date of publication and mention of the grant of the patent: **17.02.2021**
(21) Application number: 13360023.9
(22) Date of filing: 09.08.2013
(51) Int. Cl.: H04W 76/15, H04W 36/00, H04W 36/04

(54) **Method and system for initiating data transmission, a secundary node and computer program product**
Verfahren und System zur Initiierung von Datenübertragung, sekundärer Knoten und Computerprogrammprodukt
Procédé et système pour déclencher une transmission de données, noeud secondaire et produit de programme informatique

(43) Date of publication of application: 11.02.2015
(73) Proprietor: Alcatel Lucent, 91620 Nozay (FR)
(72) Inventor: Palat, Sudeep K., Swindon, Wiltshire SN5 7DJ (GB); Worrall, Chandrika K., Swindon, Wiltshire SN5 7DJ (GB)
(74) Representative: Greenwood, Matthew David

(56) References cited:
- BROADCOM CORPORATION: "Mobility for dual connectivity", 3GPP DRAFT; R2-130990 MOBILITY FOR DUAL CONNECTIVITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chicago, USA; 20130415 - 20130419 6 April 2013 (2013-04-06), XP050699404, Retrieved from the Internet: URL:http://www.3gpp.org/ftp/tsg_ran/WG2_RL 2/TSGR2_81bis/Docs/ [retrieved on 2013-04-06]
- ERICSSON ET AL: "Impact of small cell enhancements to RRC functions", 3GPP DRAFT; R2-131672 IMPACT OF SMALL CELL ENHANCEMENTS TO RRC FUNCTIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG2, no. Fukuoka, Japan; 20130520 - 20130524 11 May 2013 (2013-05-11), XP050700023, Retrieved from the Internet: URL:http://www.3gpp.org/ftp/tsg_ran/WG2_RL 2/TSGR2_82/Docs/ [retrieved on 2013-05-11]

## Description

### TECHNICAL FIELD

The present invention relates to a method, in a radio communication system comprising a user equipment in dual connection with a primary node and a secondary node, a telecommunications system, a primary node, a secondary node and to a user equipment.

### BACKGROUND

Small Cells are low power, low-cost base stations that are able to provide cellular service in residential or enterprise environments, with a typical coverage range of tens of metres. They have auto-configuration and self-optimization capabilities that enable a simple plug and play deployment, and are designed to automatically integrate themselves into an existing macrocellular network. Small cells, often referred to as pico cells, or metro cells, typically use a customer's broadband internet connection, for example DSL, cable or the like, as backhaul towards the macrocellular network. Support of non-ideal backhaul (with one way latency of few milliseconds to few tens of milliseconds) between small cells and between small cell and macro cells is considered as the typical deployment scenario. Small cell deployment for handling capacity needs in high traffic areas, such as hot spot areas, is an area of investigation. A proposal for handling capacity needs in high traffic areas is to provide dual connectivity support for user equipment. Dual connectivity support allows a User Equipment (UE) to be concurrently connected to a macro cell and a small cell, or to two small cells for example. A UE can thus be connected to and served by more than one cell at a time. Dual connectivity support is considered as a way to enable offloading of traffic when required.

R2-130990, BROADCOM CORPORATION: "Mobility for dual connectivity", XP050699404, 6 April 2013 and R2-131672, ERICSSON ET AL: "Impact of small cell enhancements to RRC functions", XP050700023, 11 May 2013 discuss mobility procedures in system that implement dual connectivity.

### SUMMARY

The reader is referred to the appended independent claims. Some preferred features are laid out in the dependent claims.

According to an example, there is provided a method, in a radio communication system, for initiating data transmission on a user plane between user equipment (UE) in dual connectivity with a primary node and a secondary node of the system after bearer modification, comprising transmitting a request for traffic offloading from the secondary node to the primary node, the request originating from either of the primary or secondary nodes, ceasing transmission to the UE from the secondary node in response to a first predefined parameter or action and initiating data transmission to the UE from the primary node over a radio interface of the system in response to a second predefined parameter or action. The first predefined parameter is a period of time, N, from the request for traffic offloading after which transmission from the secondary node to the UE ceases. Transmission to the UE from the secondary node ceases in response to the first parameter or action relating to a time period following receipt of an acknowledgement message from the UE acknowledging receipt of the request for traffic offloading, or on receipt of a radio resource control (RRC) reconfiguration complete message, or upon receipt of an indication from the primary node that the UE has been reconfigured. Data transmission can be initiated from the primary node in response to the second parameter or action relating to receipt of an uplink data packet from the UE to the primary node, or receipt of an indication of receipt of the RRC reconfiguration complete message sent by the UE. In the event that the UE continues to receive data from the secondary node after bearer modification, the UE discards such data received from the secondary node.

According to an example, there is provided a radio telecommunication system comprising a primary node, a secondary node, a UE in dual connectivity with the primary node and a secondary node of the system and an MME for the system, the system operable to transmit a request for traffic offloading from the secondary node to the primary node, the request originating from either of the primary or secondary nodes, cease transmission to the UE from the secondary node in response to a first predefined parameter or action and initiate data transmission to the UE from the primary node over a radio interface of the system in response to a second predefined parameter or action. The first predefined parameter is a period of time, N, from the request for traffic offloading after which transmission from the secondary node to the UE ceases. Transmission to the UE from the secondary node ceases in response to the first parameter or action relating to a time period following receipt of an acknowledgement message from the UE acknowledging receipt of the request for traffic offloading, or on receipt of a radio resource control (RRC) reconfiguration complete message, or upon receipt of an indication from the primary node that the UE has been reconfigured. Data transmission can be initiated from the primary node in response to the second parameter or action relating to receipt of an uplink data packet from the UE to the primary node, or on receipt of or indication of receipt of the RRC reconfiguration complete message sent by the UE. In the event that the UE continues to receive data from the secondary node after bearer modification, the UE discards such data received from the secondary node.

According to an example, there is provided a primary node of a radio telecommunication system. According to an example, there is provided secondary node of a radio telecommunication system The secondary node can be configured to cease transmission to the user equipment in response to a first predefined parameter or action.

According to an example, there is provided a computer program product, comprising a computer usable medium having computer readable program code embodied therein, said computer readable program code adapted to be executed to implement a method, in a radio communication system, for initiating data transmission between UE in dual connectivity with a primary node and a secondary node of the system after bearer modification as provided above.

### BRIEF DESCRIPTION OF THE DRAWINGS

Embodiments will now be described, by way of example only, with reference to the accompanying drawings, in which:
Figure 1 is a schematic representation of a heterogeneous telecommunications system according to an example;
Figure 2 is a schematic representation of a legacy handover procedure;
Figure 3 is a schematic representation of a process according to an example;
Figure 4 is a schematic representation of a process for data forwarding according to an example;
Figure 5 is a schematic representation of a process according to an example;
Figure 6 is a schematic representation of a further process according to an example;
Figure 7 is a schematic representation of a further process according to an example;
Figure 8 is a schematic representation of CN based bearer split according to an example; and
Figure 9 is a schematic representation of RAN level bearer split according to an example.

### DETAILED DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise, It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

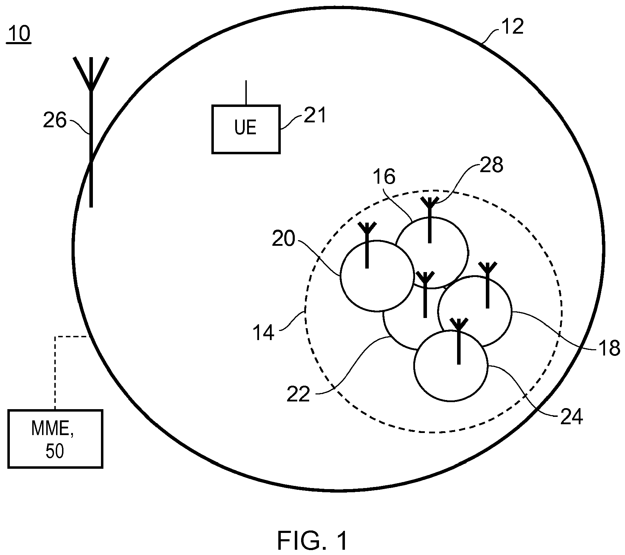

Figure 1 is a schematic representation of a heterogeneous telecommunications system 10 comprising a macro cell 12 and a cluster of small cells 14 and an mobility management entity (MME) 50. The cell 12 and respective ones of the cells in the cluster of small cells 14 are served by E-UTRAN Node Bs, also known as Evolved Node Bs (herein "eNB", also interchangeably referred to as "nodes") which form the hardware that is connected to the radio communication network that communicates directly with mobile handsets, known, as user equipment (UE).

The cluster of small cells 14 comprises a first small cell 16, a second small cell 18, a third small cell 20, a fourth small cell 22 and a fifth small cell 24. The small cells are distributed geographically to provide an area of coverage within the macro cell 12. UE 21 may roam through the network 10. When the user equipment is located within the macro cell 12, communications may be established between the user equipment and the macro cell base station 26 over an associated radio link. If the user equipment is located geographically within one of the small cells 16, 18, 20, 22 and 24, communications may be established between the user equipment and the base station of the associated small cell over an associated radio link. It will be appreciated that Figure 1 shows only an example heterogeneous network and that a plurality of macro cells may be provided, more or less than five small cells may be provided and a plurality of small cell clusters may be provided.

As described above, within the macro cell 12, there is provided multiple small cell base stations which provide a plurality of small cells 16, 18, 20, 22, and 24. The small cells provide local communications coverage for a user in their vicinity. As a user equipment comes within range of a small cell, such as the first small cell 16, a handover may occur between the base station 26 of the macro cell and the base station 28 of the small cell, such as when the base station of the small cell detects that user equipment has come within range. Likewise, as a user equipment comes within range of a different small cell, a handover may occur between the base station of the current small cell and the base station of the new small cell when the base station of the new small cell detects that user equipment has come within range.

In order to handle the capacity needs of a high traffic area, a user equipment in the telecommunications network 10 of Figure 1 may be provided with dual connectivity support. That is, a user equipment may be connected to both the macro cell 12 and the small cell 16. Also, it should be appreciated that a user equipment may be dual connected to small cell 16 and any of the other small cells 18 to 24.

Dual connectivity as described with reference to figure 1 can be used to enable offloading of traffic via small cell when required. For example, a data flow associated with a specific service in use by the user equipment can be offloaded to a small cell in high traffic areas that may otherwise cause the macro cell 12 to become overloaded for example.

For efficient scheduling support the traffic offloading decision can be made at the radio access network (RAN) and take into account parameters such as channel quality and RAN load information. Thus improved load balancing could be achieved with dual connectivity. More over the offloading trigger may be initiated by the macro eNB or small cell eNB (eg: based on the cell load).

Due a number of reasons, a legacy handover (HO) procedure could not be used for traffic offloading bearer management. These reasons are that, for example, in dual connectivity only the macro eNB has a connection to the MME and the offloading decision may be taken by one eNB while the data is been served by the other eNB. For example, a macro eNB may make the decision to modify the offloaded bearer while the bearers are served by the small cell. These issues impact how to establish a user data transmission for offloaded bearers and how to minimize the data interruption during the bearer modification or offloaded decision change. In an example, there is provided a method and system for initiating data transmission after bearer modification. The procedure is designed to minimize the data plane interruptions.

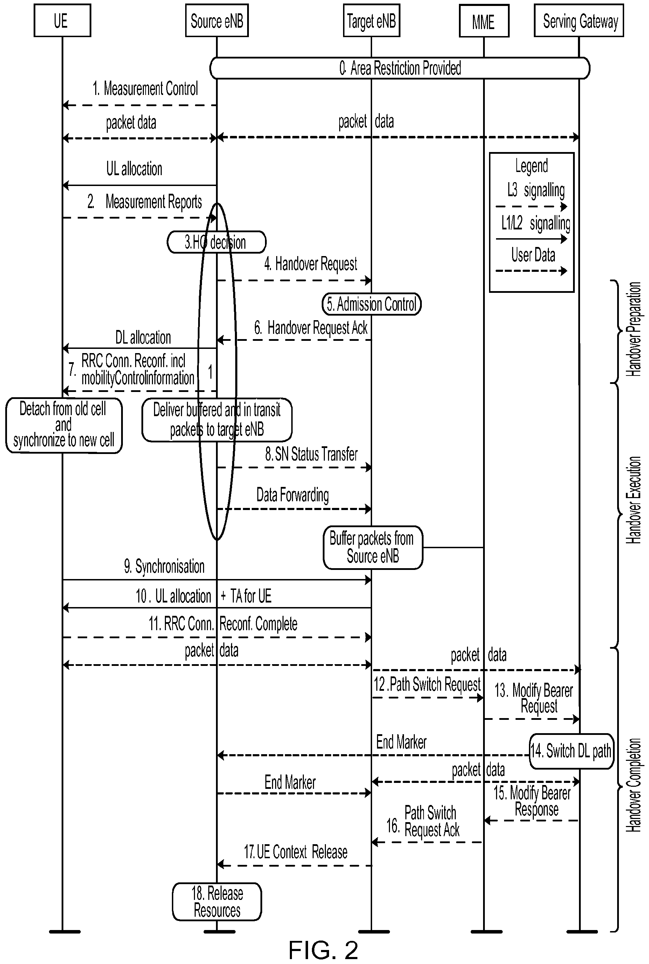

Figure 2 is a schematic representation of a legacy handover procedure. A problem area which is relevant to the user plane transfer with regards to the bearer modification is circled and marked 1. When the macro eNB makes the decision to offload traffic via a small cell, ie: the corresponding RB for the EPS bearer is established between the small cell and the UE, the legacy data forwarding and PDCP Sequence Number status transfer mechanism can be re-used. The same legacy mechanism cannot be used when the offloaded traffic over the small cell is modified such as to be served via the macro cell.

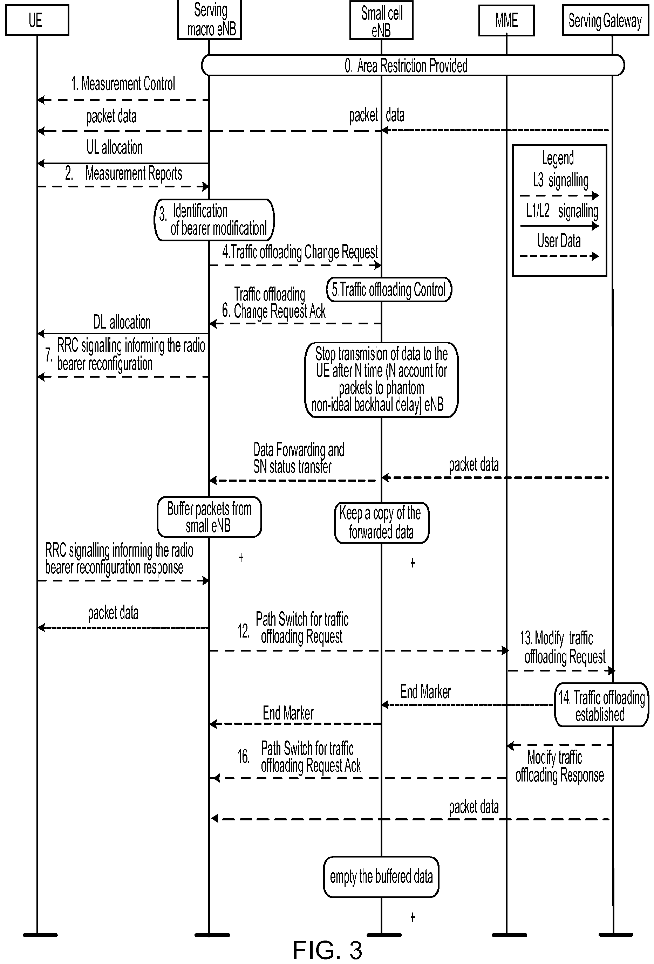

Figure 3 is a schematic representation of a method according to an example, which illustrates one embodiment of how data forwarding and Sequence Number status transfer is enabled for the Down Link traffic when the traffic is moved from a small cell to a macro cell. Figure 3 assumes that the UE only has one RRC protocol communicating to the macro eNB RRC. Therefore all RRC messages are transmitted/terminated at the macro eNB.

### A: data transmission to the UE

Upon transmission of the offloading response by the small cell eNB, the cell continues transmitting the data to the UE over small cell for a period of time, N. The period, N, in an example is provided to the small cell from the macro eNB together with a traffic offloading request message. In another embodiment, N can be negotiated between the small cell and macro cell during the small cell configuration. The time period is to account for the transmission delay of information of bearer modification to the UE. Therefore, it may include backhaul delay, over air transmission delay, estimated time to receive a RLC ACK and the UE processing delay for the L3 message and so on. Allowing the data transmission over the old path for a period N reduces the possibility of data interruption.

In another embodiment, the small cell; may stop transmission of data transmission to the UE after receiving an L2 acknowledgement from the UE of receipt of the Reconfiguration message + UE processing delay for cases where the source cell is transmitting the reconfiguration message to the UE. Alternatively, the small cell may stop transmission on receipt of RRC Reconfiguration complete message if this message is sent to the small cell. In another option, the small cell may stop transmission upon an indication from the macro cell that UE has successfully reconfigured.

The UE may continue to receive data over the small cell even after reconfiguration of bearer to the macro cell. In this case, the UE shall discard any data that is received from the small cell.

### B: SN status transfer and data forwarding

Upon transmission of the offloading response by the small cell eNB, in one embodiment, the cell transmits the SN status report based on the current PDCP status at the small cell. Data forwarding starts immediately upon the transmission of the offloading response by the small cell starting from the data indicated by the SN status report.

In another embodiment, SN status report is computed accommodating the amount of data which can be transmitted during predefined N time period. The period, N, in an example is provided to the small cell from the macro eNB together with a traffic offloading request message. In another embodiment, N can be negotiated between the small cell and macro cell during the small cell configuration. The time period is to account for the transmission delay of information of bearer modification to the UE. Therefore, it may include backhaul delay, over air transmission delay, estimated time to receive a RLC ACK and the UE processing delay for the L3 message and so on. Allowing the data transmission over the old path for a period N reduces the possibility of data interruption. Remaining data is forwarded after account for estimated data transmission for the N period.

The data transmission from the target cell to the UE can start once it knows the UE has performed the reconfiguration and is ready to receive data from the target cell. This can be triggered by the reception of any UL packet from the UE in the target cell confirming the reconfiguration. Specific examples for these could be synchronisation request preamble, completion of UL synchronisation procedure or reception of PDCP status PDU from the UE or any other UL data (in case of moving a bearer to an already configured small cell). Another possibility is reception of RRC connection reconfiguration complete message at the small cell over X2 from the macro cell.

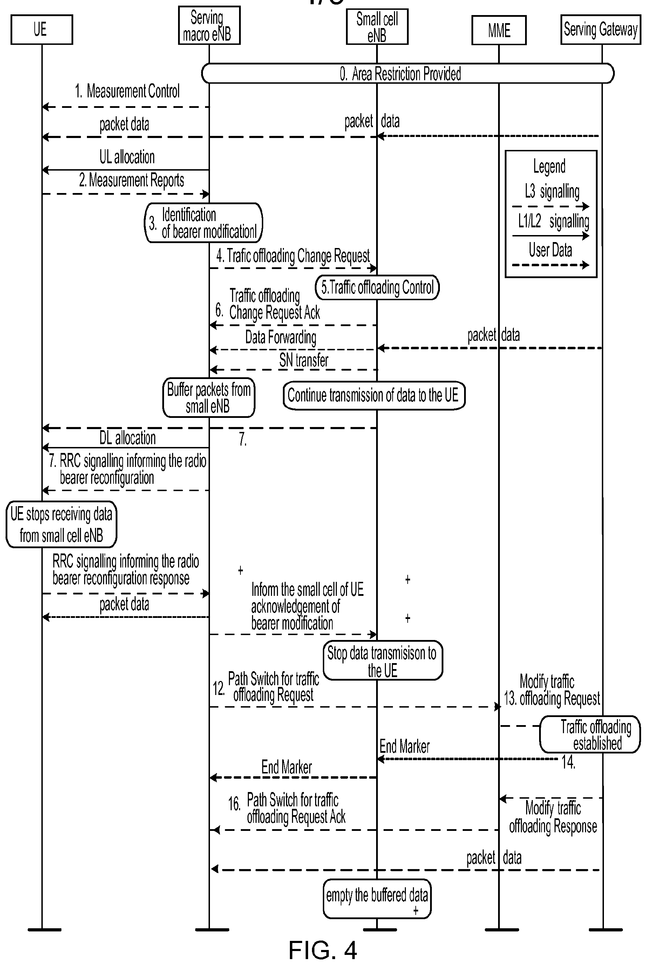

Another embodiment of method for data forwarding and SN transfer for DL data transmission is illustrated in Figure 4. Similarly to the embodiment of Figure 3, it is assumed that single RRC entity at the network and offloaded EPS bearer is terminates at the small cell eNB.

As the data forwarding starts early, the data interruption can be minimized. Upon the reception of RRC connection reconfiguration complete message, the macro eNB may inform the small cell of the complete of bearer modification, thus the small cell eNB stops the data transmission to the UE.

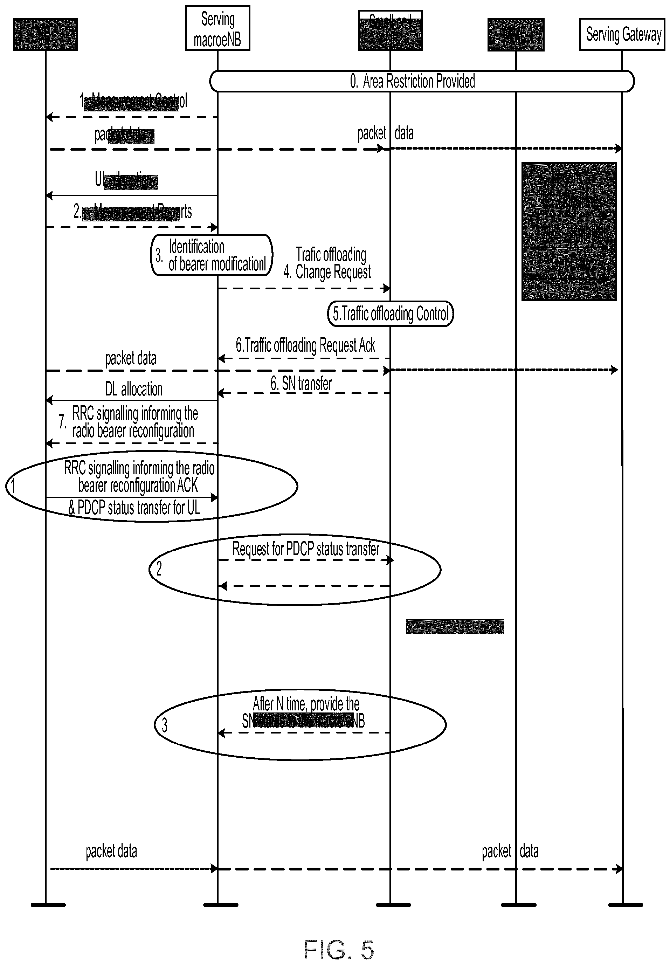

PDCP SN transfer is also modified. Three different methods of providing the PDCP status of the modified bearers to the macro eNB is shown in figure 5, where the source cell is the small cell and the target cell is the macro cell. The PDCP status PDU informs the small cell which PDCP PDUs were received over the macro cell. The small cell and UE discards data that is duplicated (received over both cells). Figure 5 illustrates the three different methods for SN status transfer illustration in Figure 5 uses UL transmission as an example. In a first method, PDCP status is provided to the macro eNB by the UE together with RRC connection reconfiguration complete message. In the second method, upon the reception of RRC connection reconfiguration complete message, the macro eNB request the SN transfer from the small cell eNB for the modified bearers. In a third method, the small cell provides the SN transfer after a period of time, N, upon transmission of the offloading request response message. N is account for information transfer delay and may be provided to the small cell by the macro eNB.

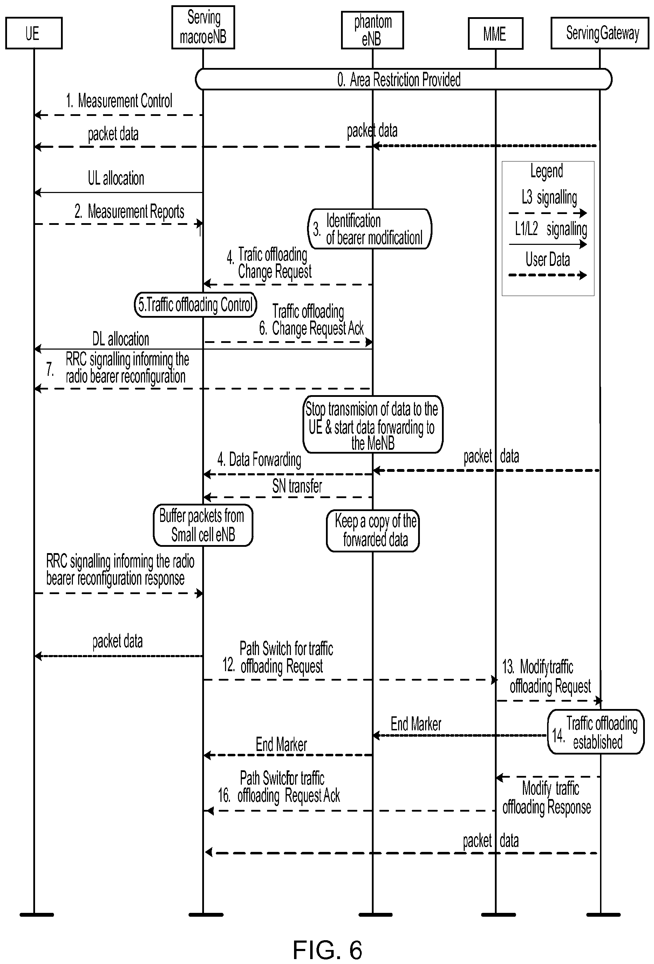

Figure 6 is a schematic representation of a process according to an example, illustrating the DL offload bearer modification considering two RRCs located respectively at the macro and small cell eNBs. The UE communicates RRC messages to both macro and small cell eNBs. Note that the data forwarding and SN transfer is similar to the legacy procedure considering that the traffic is served by the decision making eNB prior to the bearer modification, i.e. small cell eNB makes the decision for bearer modification of the bearers served by the small cell eNB.

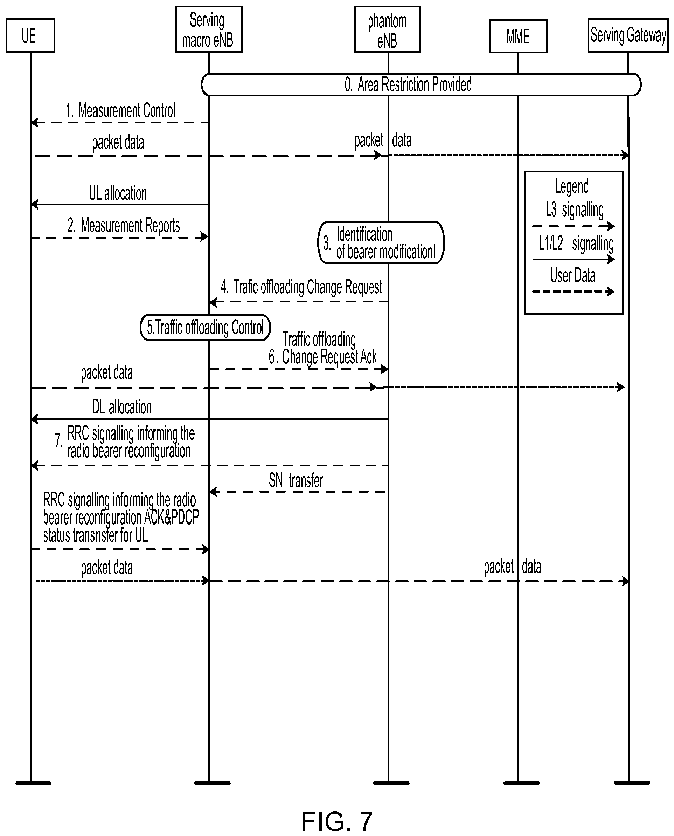

Figure 7 is a schematic representation of UL offloaded bearer modification considering two RRCs located respectively at the macro and small cell eNBs. The UE communicates RRC messages to both macro and small cell eNBs. Note that the data forwarding and SN transfer is similar to the legacy procedure considering that the traffic is served by the decision making eNB prior to the bearer modification, i.e. small cell eNB makes the decision for bearer modification of the bearers served by the small cell eNB.

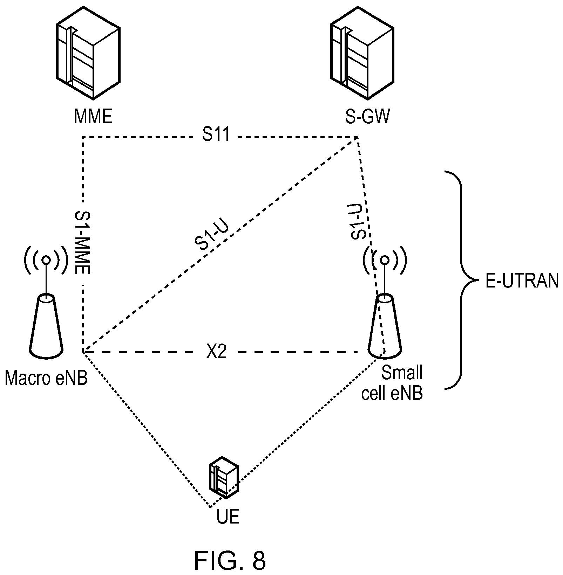

Note that the embodiments are explained based on CN based bearer split. CN based bearer split is illustrated in figure 8. S1-MME interface is between the MME and the macro eNB while Sl-U interface for offloaded bearers are between the S-GW and the small cell. S1-U interface for bearers served by the macro cell is between the S-GW and the macro cell. The illustration shows a single S-GW however in practice small cell and macro cell may also be served by different S-GW.

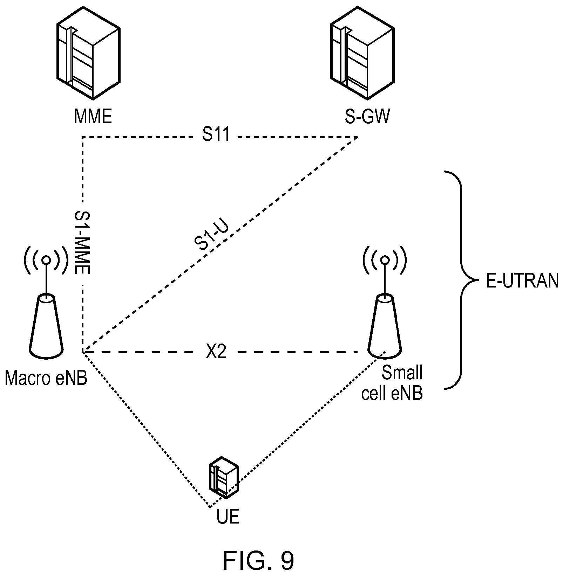

However, the methods for data forwarding and SN transfer to minimize data interruption is equally applicable to other user plane architectures where RAN level bearer split is used for example. RAN level bearer split is illustrated in figure 9.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning of the claims are to be embraced within their scope.

## Claims

1. A method, in a radio communication system, for initiating data transmission on a user plane between user equipment, UE, in dual connectivity with a primary node and a secondary node of the system after bearer modification, comprising:
transmitting a request for traffic offloading from the primary node to the secondary node in order to offload traffic from the secondary node to the primary node; and, in response to the request:
ceasing transmission to the UE from the secondary node in response to a predefined action at the secondary node, the action indicative of the UE being reconfigured to receive data from the primary node; and
initiating data transmission to the UE from the primary node over a radio interface of the system in response to a predefined action at the primary node, the action indicative of the UE being reconfigured to receive data from the primary node.

2. A method as claimed in claim 1, wherein the predefined action i at the secondary node is an expiration of a period of time, N, from the request for traffic offloading after which transmission from the secondary node to the UE ceases.

3. A method as claimed in claim 1, wherein the predefined action i at the secondary node is an expiration of a time period following receipt of an acknowledgement message from the UE acknowledging receipt of the request for traffic offloading, or receipt of a radio resource control, RRC, reconfiguration complete message, or receipt of an indication from the primary node that the UE has been reconfigured.

4. A method as claimed in any preceding claim, wherein the predefined action at the primary node is receipt of an uplink data packet from the UE to the primary node, or receipt of an indication of receipt of the RRC reconfiguration complete message sent by the UE.

5. A method as claimed in any of claims 2 to 4, wherein, in the event that the UE continues to receive data from the secondary node after bearer modification, the UE discards such data received from the secondary node.

6. A radio telecommunication system (10) comprising:
a primary node (26);
a secondary node (16, 18, 20, 22, 24);
a user equipment, UE, (21) in dual connectivity with the primary node (26) and the secondary node (16, 18, 20, 22, 24) of the system (10); and
a mobility management entity, MME, (50) for the system, the system operable to:
transmit a request for traffic offloading from the primary node to the secondary node in order to offload traffic from the secondary node to the primary node; and, in response to the request;
cease transmission to the UE from the secondary node in response to a predefined action at the secondary node, the action indicative of the UE being reconfigured to receive data from the primary node; and
initiate data transmission to the UE from the primary node over a radio interface of the system in response to a predefined action at the primary node, the action indicative of the UE being reconfigured to receive data from the primary node.

7. A system as claimed in claim 6, wherein the predefined action at the secondary node comprises an expiration of a period of time, N, from the request for traffic offloading after which transmission from the secondary node to the UE ceases.

8. A system as claimed in claim 6, wherein the predefined action at the secondary node comprises an expiration of a time period following receipt of an acknowledgement message from the UE acknowledging receipt of the request for traffic offloading, or receipt of a radio resource control, RRC, reconfiguration complete message, or receipt of an indication from the primary node that the UE has been reconfigured.

9. A system as claimed in any of claims 6 to 8, wherein the predefined action at the primary node comprises receipt of an uplink data packet from the UE to the primary node, or an indication of receipt of the RRC reconfiguration complete message sent by the UE.

10. A system as claimed in any of claims 6 to 9, wherein, in the event that the UE continues to receive data from the secondary node after bearer modification, the UE discards such data received from the secondary node.

11. A secondary node (16, 18, 20, 22, 24) of a radio telecommunication system (10), operable in a dual connectivity link with user equipment (21) also connected to a primary node (26), the secondary node being configured to receive a request for traffic offloading from the primary node in order to offload traffic from the secondary node to the primary node; and, in response to the request cease transmission to the user equipment in response to a predefined action at the secondary node, said action indicative of the user equipment being reconfigured to receive data from the primary node.

12. A computer program product, comprising a computer usable medium having computer readable program code embodied therein, said computer readable program code adapted to be executed to implement a method, in a radio communication system, for initiating data transmission between UE in dual connectivity with a primary node and a secondary node of the system after bearer modification as claimed in any of claims 1 to 5.

## Patentansprüche

1. Verfahren in einem Funkkommunikationssystem zum Initiieren der Datenübertragung auf einer Benutzerebene zwischen einer Teilnehmereinrichtung, UE, in dualer Konnektivität mit einem primären Knoten und einem sekundären Knoten des Systems nach einer Trägeränderung, das Folgendes umfasst:
Übertragen einer Anforderung zur Verkehrsauslagerung vom primären Knoten zum sekundären Knoten, um Verkehr vom sekundären Knoten zum primären Knoten auszulagern; und in Reaktion auf die Anforderung:
Beenden der Übertragung vom sekundären Knoten zur UE in Reaktion auf eine vordefinierte Aktion am sekundären Knoten, wobei die Aktion anzeigt, dass die UE zum Empfangen von Daten vom primären Knoten neu ausgelegt wird; und
Initiieren der Datenübertragung vom primären Knoten über eine Funkschnittstelle des Systems zur UE in Reaktion auf eine vordefinierte Aktion am primären Knoten, wobei die Aktion anzeigt, dass die UE zum Empfangen von Daten vom primären Knoten neu ausgelegt wird.

2. Verfahren nach Anspruch 1, wobei die vordefinierte Aktion am sekundären Knoten ein Ablauf einer Zeitperiode, N, von der Anforderung zur Verkehrsauslagerung, nach der die Übertragung vom sekundären Knoten zur UE beendet wird, ist.

3. Verfahren nach Anspruch 1, wobei die vordefinierte Aktion am sekundären Knoten ein Ablauf einer Zeitperiode nach Empfang einer Bestätigungsnachricht von der UE, die den Empfang der Anforderung zur Verkehrsauslagerung bestätigt, oder Empfang einer Funkressourcensteuerungs(RRC)-Neuauslegungsabschlussnachricht oder Empfang einer Anzeige vom primären Knoten, dass die UE neu ausgelegt wurde, ist.

4. Verfahren nach einem der vorhergehenden Ansprüche, wobei die vordefinierte Aktion am primären Knoten der Empfang eines Uplinkdatenpakets von der UE zum primären Knoten oder der Empfang einer Anzeige des Empfangs der RRC-Neuauslegungsabschlussnachricht, die von der UE gesendet wird, ist.

5. Verfahren nach einem der Ansprüche 2 bis 4, wobei die UE in dem Fall, in dem die UE nach der Trägeränderung weiter Daten vom sekundären Knoten empfängt, diese vom sekundären Knoten empfangenen Daten verwirft.

6. Funktelekommunikationssystem (10), das Folgendes umfasst:
einen primären Knoten (26);
einen sekundären Knoten (16, 18, 20, 22, 24);
eine Teilnehmereinrichtung, UE, (21) in dualer Konnektivität mit dem primären Knoten (26) und dem sekundären Knoten (16, 18, 20, 22, 24) des Systems (10); und
eine Mobilitätsverwaltungsentität, MME, (50) des Systems, wobei das System zu Folgendem betreibbar ist:
Übertragen einer Anforderung zur Verkehrsauslagerung vom primären Knoten zum sekundären Knoten, um Verkehr vom sekundären Knoten zum primären Knoten auszulagern; und in Reaktion auf die Anforderung;
Beenden der Übertragung vom sekundären Knoten zur UE in Reaktion auf eine vordefinierte Aktion am sekundären Knoten, wobei die Aktion anzeigt, dass die UE zum Empfangen von Daten vom primären Knoten neu ausgelegt wird; und
Initiieren einer Datenübertragung vom primären Knoten über eine Funkschnittstelle des Systems zur UE in Reaktion auf eine vordefinierte Aktion am primären Knoten, wobei die Aktion anzeigt, dass die UE zum Empfangen von Daten vom primären Knoten neu ausgelegt wird.

7. System nach Anspruch 6, wobei die vordefinierte Aktion am sekundären Knoten den Ablauf einer Zeitperiode, N, von der Anforderung zur Verkehrsauslagerung, nach der die Übertragung vom sekundären Knoten zur UE beendet wird, umfasst.

8. System nach Anspruch 6, wobei die vordefinierte Aktion am sekundären Knoten den Ablauf einer Zeitperiode nach Empfang einer Bestätigungsnachricht von der UE, die den Empfang der Anforderung zur Verkehrsauslagerung bestätigt, oder Empfang einer Funkressourcensteuerungs(RRC)-Neuauslegungsabschlussnachricht oder Empfang einer Anzeige vom primären Knoten, dass die UE neu ausgelegt wurde, umfasst.

9. System nach einem der Ansprüche 6 bis 8, wobei die vordefinierte Aktion am primären Knoten den Empfang eines Uplinkdatenpakets von der UE zum primären Knoten oder den Empfang einer Anzeige des Empfangs der RRC-Neuauslegungsabschlussnachricht, die von der UE gesendet wird, umfasst.

10. System nach einem der Ansprüche 6 bis 9, wobei die UE in dem Fall, in dem die UE nach der Trägeränderung weiter Daten vom sekundären Knoten empfängt, diese vom sekundären Knoten empfangenen Daten verwirft.

11. Sekundärer Knoten (16, 18, 20, 22, 24) eines Funktelekommunikationssystems (10), der auf einem dualen Konnektivitätslink mit einer Teilnehmereinrichtung (21), die auch mit einem primären Knoten (26) verbunden ist, betreibbar ist, wobei der sekundäre Knoten dazu ausgelegt ist, eine Anforderung zur Verkehrsauslagerung vom primären Knoten zu empfangen, um Verkehr vom sekundären Knoten zum primären Knoten auszulagern; und in Reaktion auf die Anforderung die Übertragung zur Teilnehmereinrichtung in Reaktion auf eine vordefinierte Aktion am sekundären Knoten zu beenden, wobei die Aktion anzeigt, dass die Teilnehmereinrichtung zum Empfangen von Daten vom primären Knoten neu ausgelegt wird.

12. Computerprogrammprodukt, das ein von einem Computer verwendbares Medium umfasst, auf dem sich computerlesbarer Programmcode befindet, wobei der computerlesbare Programmcode angepasst ist, ausgeführt zu werden, um in einem Funkkommunikationssystem nach einer Trägeränderung ein Verfahren zum Initiieren der Datenübertragung zwischen der UE in dualer Konnektivität mit einem primären Knoten und einem sekundären Knoten des Systems nach einem der Ansprüche 1 bis 5 zu implementieren.

## Revendications

1. Procédé, dans un système de communication radio, pour initier une transmission de données sur un plan utilisateur entre un équipement utilisateur, UE, en double connectivité avec un nœud primaire et un nœud secondaire du système après une modification de support, comprenant :
la transmission d'une demande de déchargement de trafic du nœud primaire au nœud secondaire afin de décharger un trafic du nœud secondaire au nœud primaire ; et, en réponse à la demande :
cesser une transmission vers l'UE depuis le nœud secondaire en réponse à une action prédéfinie au niveau du nœud secondaire, l'action indiquant que l'UE est reconfiguré pour recevoir des données en provenance du nœud primaire ; et
initier une transmission de données vers l'UE depuis le nœud primaire sur une interface radio du système en réponse à une action prédéfinie au niveau du nœud primaire, l'action indiquant que l'UE est reconfiguré pour recevoir des données en provenance du nœud primaire.

2. Procédé selon la revendication 1, dans lequel l'action prédéfinie au niveau du nœud secondaire est une expiration d'une période de temps, N, à partir de la demande de déchargement de trafic après laquelle une transmission du nœud secondaire à l'UE cesse.

3. Procédé selon la revendication 1, dans lequel l'action prédéfinie au niveau du nœud secondaire est une expiration d'une période de temps suivant la réception d'un message d'accusé de réception en provenance de l'UE accusant réception de la demande de déchargement de trafic, ou la réception d'un message d'achèvement de reconfiguration de contrôle de ressource radio, RRC, ou la réception d'une indication en provenance du nœud primaire selon laquelle l'UE a été reconfiguré.

4. Procédé selon une quelconque revendication précédente, dans lequel l'action prédéfinie au niveau du nœud primaire est la réception d'un paquet de données de liaison montante de l'UE au nœud primaire, ou la réception d'une indication de réception du message d'achèvement de reconfiguration RRC envoyé par l'UE.

5. Procédé selon l'une quelconque des revendications 2 à 4, dans lequel, dans le cas où l'UE continue à recevoir des données en provenance du nœud secondaire après une modification de support, l'UE rejette de telles données reçues en provenance du nœud secondaire.

6. Système de télécommunication radio (10) comprenant :
un nœud primaire (26) ;
un nœud secondaire (16, 18, 20, 22, 24) ;
un équipement utilisateur, UE, (21) en double connectivité avec le nœud primaire (26) et le nœud secondaire (16, 18, 20, 22, 24) du système (10) ; et
une entité de gestion de mobilité, MME, (50) pour le système, le système étant exploitable pour :
transmettre une demande de déchargement de trafic du nœud primaire au nœud secondaire afin de décharger un trafic du nœud secondaire au nœud primaire ; et, en réponse à la demande :
cesser une transmission vers l'UE depuis le nœud secondaire en réponse à une action prédéfinie au niveau du nœud secondaire, l'action indiquant que l'UE est reconfiguré pour recevoir des données en provenance du nœud primaire ; et
initier une transmission de données vers l'UE depuis le nœud primaire sur une interface radio du système en réponse à une action prédéfinie au niveau du nœud primaire, l'action indiquant que l'UE est reconfiguré pour recevoir des données en provenance du nœud primaire.

7. Système selon la revendication 6, dans lequel l'action prédéfinie au niveau du nœud secondaire comprend une expiration d'une période de temps, N, à partir de la demande de déchargement de trafic après laquelle une transmission du nœud secondaire à l'UE cesse.

8. Système selon la revendication 6, dans lequel l'action prédéfinie au niveau du nœud secondaire comprend une expiration d'une période de temps suivant la réception d'un message d'accusé de réception en provenance de l'UE accusant réception de la demande de déchargement de trafic, ou la réception d'un message d'achèvement de reconfiguration de contrôle de ressource radio, RRC, ou la réception d'une indication en provenance du nœud primaire selon laquelle l'UE a été reconfiguré.

9. Système selon l'une quelconque des revendications 6 à 8, dans lequel l'action prédéfinie au niveau du nœud primaire comprend la réception d'un paquet de données de liaison montante de l'UE au nœud primaire, ou la réception d'une indication de réception du message d'achèvement de reconfiguration RRC envoyé par l'UE.

10. Système selon l'une quelconque des revendications 6 à 9, dans lequel, dans le cas où l'UE continue à recevoir des données en provenance du nœud secondaire après une modification de support, l'UE rejette de telles données reçues en provenance du nœud secondaire.

11. Nœud secondaire (16, 18, 20, 22, 24) d'un système de télécommunication radio (10), exploitable dans une liaison à double connectivité avec un équipement utilisateur (21) également connecté à un nœud primaire (26), le nœud secondaire étant configuré pour recevoir une demande de déchargement de trafic en provenance du nœud primaire afin de décharger un trafic du nœud secondaire au nœud primaire ; et, en réponse à la demande cesser une transmission vers l'équipement utilisateur en réponse à une action prédéfinie au niveau du nœud secondaire, ladite action indiquant que l'équipement utilisateur est reconfiguré pour recevoir des données en provenance du nœud primaire.

12. Produit de programme informatique, comprenant un support utilisable par ordinateur dans lequel est incorporé un code de programme lisible par ordinateur, ledit code de programme lisible par ordinateur étant adapté pour être exécuté pour mettre en œuvre un procédé, dans un système de communication radio, pour initier une transmission de données entre un UE en double connectivité avec un nœud primaire et un nœud secondaire du système après une modification du support selon l'une quelconque des revendications 1 à 5.
